## Europäisches Patentamt

## European Patent Office

## Office européen des brevets

(19)

(11) Veröffentlichungsnummer: **0 053 291**
**B1**

(12) **EUROPÄISCHE PATENTSCHRIFT**

(45) Veröffentlichungstag der Patentschrift:
27.03.85

(51) Int. Cl.⁴: **H 04 N 7/18**

(21) Anmeldenummer: **81109319.4**

(22) Anmeldetag: **30.10.81**

(54) **Vorrichtung für die Auswertung von Röntgenfilmen.**

(30) Priorität: **01.12.80 DE 3045161**

(43) Veröffentlichungstag der Anmeldung:
**09.06.82 Patentblatt 82/23**

(45) Bekanntmachung des Hinweises auf die Patenterteilung:
**27.03.85 Patentblatt 85/13**

(84) Benannte Vertragsstaaten:
**AT BE CH DE FR GB IT LI LU NL SE**

(56) Entgegenhaltungen:
**FR - A - 1 535 618**
**FR - A - 2 170 936**

(73) Patentinhaber: **Heitlinger, Paul, Dr., Chemnitzer Strasse 15, D-6054 Rodgau 3 (Nieder-Roden) (DE)**
Patentinhaber: **Rödder, Fritz, Schulstrasse 1, D-6273 Waldems/Esch (DE)**

(72) Erfinder: **Lemke, Norbert, Veilchenstrasse 10, D-8031 Puchheim (DE)**

(74) Vertreter: **Weber, Dieter, Dr. et al, Dr. Dieter Weber und Klaus Seiffert Patentanwälte Gustav-Freytag-Strasse 25, D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Für die Auswertung von Röntgenfilmen durch den Arzt werden bislang ausschließlich Lichtkästen verwendet, die eine von der Rückseite beleuchtete, Licht diffus durchlassende weiße Scheibe besitzen, auf deren Vorderseite der auszuwertende Röntgenfilm aufgelegt wird. Vielfach ist die Auswertung mit solchen Lichtkästen schwierig, insbesondere dann, wenn es sich um kontrastarme, sehr helle und/oder sehr kleine Röntgenaufnahmen handelt. Kleine Röntgenfilme entstehen beispielsweise in der Dentalmedizin, und helle Röntgenbilder erhält man bei Anwendung einer möglichst kleinen Strahlungsmenge, um den Patienten zu schonen.

Zum Stand der Technik gehören auch bereits Zusatzgeräte für Lichtkästen, wie Lupen, die bei kleinen Röntgenbildern eine Ausschnittsvergrößerung ermöglichen, und Kontrastfilter, die helle Röntgenbilder abdunkeln. Lupen ergeben jedoch immer eine Verzerrung des Bildes und verschlechtern den Kontrast, und Kontrastfilter ergeben nur insgesamt eine Abdunkelung des Bildes, ohne den Kontrast zwischen hell und dunkel tatsächlich zu verstärken.

Die FR-A-2 170 936 betrifft ein Bildschirmlesegerät mit einer verschieblich gelagerten Dokumentenauflagefläche, einer Fernsehkamera, einer Lichtquelle und einem elektronischen Bildwiedergabegerät mit Einrichtungen zur Veränderung des Bildkontrastes und der Bildhelligkeit. Diese Vorrichtung ist nicht für die Auswertung von Röntgenfilmen geeignet, da sie mit Drauflicht arbeitet. Außerdem gestattet eine solche Vorrichtung nicht gleichzeitig eine Grobauswertung in der Art eines Lichtkastens und die unmittelbare Vergrößerung ausgewählter Bereiche desselben Röntgenfilmes.

Die der Erfindung zugrundeliegende Aufgabe bestand somit darin, die Nachteile solcher bekannten Vorrichtungen für die Auswertung von Röntgenfilmen zu beseitigen und die Auswertbarkeit durch Kontraständerung, Einstellbarkeit der Bildhelligkeit und dergleichen zu verbessern.

Die erfindungsgemäße Vorrichtung für die Auswertung von Röntgenfilmen mit einem Gehäuse mit einer Filmauflagefläche, einer Fernsehkamera, einer ersten Lichtquelle und einer wirkungsgemäßen Verbindung zwischen der Bildaufnahmeröhre der Fernsehkamera und einem elektronischen Bildwiedergabegerät mit an sich bekannten Einrichtungen zur Veränderung des Bildkontrastes, zur Veränderung der Bildhelligkeit und/oder zur Negativ-Positiv-Bildumkehr ist dadurch gekennzeichnet, daß das Gehäuse einen oberen und einen unteren Teilraum einschließt, daß die den unteren Teilraum nach oben begrenzende Filmauflagefläche über die vordere Begrenzung des oberen Teilraumes hinausragt, daß dieser darüber hinausragende Teil der Filmauflagefläche als eine Platte, die Licht diffus hindurchtreten läßt, wie als weiße Glasoder Kunststoffplatte, ausgebildet ist und unter dieser Platte eine zweite Lichtquelle angeordnet ist, und daß unmittelbar hinter der vorderen Begrenzung des oberen Teilraumes mittig in der Ebene der Filmauflagefläche ein transparentes Fenster, auf der einen Seite desselben die Fernsehkamera und auf der anderen Seite desselben die erste Lichtquelle angeordnet ist.

Die Anwendung einer an sich bekannten Fernsehkamera in wirkungsmäßiger Verbindung mit einem an sich bekannten Fernsehwiedergabegerät für die Auswertung von Röntgenfilmen gestattet überraschenderweise eine erheblich bessere Erkennung von Einzelteilen, da bestimmte Details bei echter Kontraständerung und/oder Aufhellung oder Nachdunkelung und andere Details bei Negativ-Positiv-Bildumkehr erheblich besser erkennbar und diagnostizierbar sind. Auf diese Weise wird die Diagnose anhand von Röntgenfilmen sicherer, da geringe Aufhellungen oder Schatten weniger leicht übersehen werden. Nach dem Stand der Technik besteht die Gefahr eines solchen Übersehens insbesondere bei sehr hellen Röntgenaufnahmen, die mit bekannten Mitteln zwar insgesamt abgedunkelt werden können, ohne daß dabei jedoch die Kontraste zwischen hell und dunkel verstärkt werden können, so daß eine solche Abdunkelung mit sogenannten Kontrastfiltern die Auffindung solcher Details praktisch nicht erleichtert. Die Vorrichtung nach der Erfindung ermöglicht somit erstmals eine echte Kontrastveränderung im Röntgenbild und damit eine Verstärkung heller oder dunkler Bildbereiche.

Die Filmauflagefläche ist so ausgebildet, daß sie in einem Teilbereich die Funktion eines an sich bekannten Lichtkastens hat und in diesem Teilbereich die direkte visuelle Betrachtung ermöglicht, um so bestimmte für die Diagnose wichtige Bereiche auswählen zu können, die dann über das Fenster der Filmauflagefläche geschoben und unter Vergrößerung auf den Bildschirm des elektronischen Bildwiedergabegerätes übertragen werden. Da das transparente Fenster in dieser über die vordere Begrenzung des oberen Teilraumes hinausragenden Filmauflagefläche liegt, kann der Arzt größere Röntgenfilme zunächst mit Hilfe der zweiten Lichtquelle visuell in der Übersicht betrachten, sich den ihn interessierenden Teilbereich auswählen und diesen unmittelbar und problemlos über das Fenster schieben und so zur vergrößerten Wiedergabe auf dem Bildschirm bringen.

Gleichzeitig ergibt die Vorrichtung bei Auswahl einer entsprechenden Bildschirmgröße eine starke Vergrößerung kleiner Röntgenfilme oder von Ausschnitten größerer Röntgenfilme ohne Bildverzerrung und ohne Kontrastverschlechterung, was bei Verwendung von Lupen zwangsläufig eintreten würde. Auch dies verbessert die Auswertbarkeit von Röntgenfilmen und erleichtert daher die Diagnose.

Es ist zweckmäßig, die Filmauflagefläche mit dem transparenten Fenster waagerecht anzuordnen, um den auszuwertenden Röntgenfilm auf dieser Filmauflagefläche verschieben und so den gewünschten Bereich auswählen und entsprechend vergrößern zu können.

Weiterhin besteht eine zweckmäßige Ausführungsform der Vorrichtung darin, daß unterhalb oder oberhalb der Filmauflagefläche eine Fernsehkamera so angeordnet ist, daß deren optische Achse parallel zu der Filmauflagefläche liegt und daß zwischen dem Fenster und der Optik der Fernsehkamera ein Spiegel im Winkel 45° zu dem Fenster und zu der optischen Achse der Fernsehkamera angeordnet ist und so das durch den auf dem Fenster aufgelegten Röntgenfilm hindurchtretende Licht zu der Optik der Fernsehkamera umlenkt. Wenn diese Fernsehkamera unterhalb des Fensters angeordnet ist, liegt die erste Lichtquelle oberhalb des Fensters. Wenn die Fernsehkamera oberhalb des Fensters angeordnet ist, liegt die erste Lichtquelle unterhalb des Fensters. Zweckmäßig ist zwischen der Lichtquelle und dem Fenster eine Scheibe etwa aus weißem Glas oder weißem Kunststoff angeordnet, die das Licht dieser Lichtquelle diffus hindurchtreten läßt.

Um auch relativ große Röntgenfilme, wie Panoramaaufnahmen der Dentalmedizin auswerten und Details daraus über das transparente Fenster bringen zu können, auch wenn diese Details etwa am Rande des Röntgenfilmes liegen, besteht eine besonders zweckmäßige Ausbildung der Vorrichtung darin, daß die Seitenwände des Gehäuses zwischen dem oberen und dem unteren Teilraum oberhalb der Filmauflagefläche parallel zu dieser angeordnete Schlitze aufweisen. Dem gleichen Zweck dient es, daß sich die Filmauflagefläche zweckmäßig zwischen dem unteren und dem oberen Teilraum über das transparente Fenster hinaus erstreckt. Aufgrund dieser Merkmale der erfindungsgemäßen Vorrichtung lassen sich leicht auch bei größeren Röntgenfilmen beliebige Details mit Hilfe des Bildwiedergabegerätes heraus vergrößern.

Damit nicht nur große, sondern mit dem gleichen Gerät auch kleine Röntgenfilme ausgewertet werden können, ist es zweckmäßig, in der Vorderwand des oberen Teilraumes des Gehäuses oberhalb des Fensters eine Finterausnehmung vorzusehen, so daß der Arzt kleine Röntgenfilme, wie sie bei der Dentalmedizin anfallen, von Hand auf das Fenster legen und von dort entfernen kann, ohne zusätzliche mechanische Mittel zu benötigen.

Damit die zweite Lichtquelle die Bildwiedergabe auf dem Bildschirm nicht beeinträchtigt, ist es günstig, die zweite Lichtquelle gegenüber der Fernsehkamera abzuschirmen.

Eine besonders günstige Anordnung in der erfindungsgemäßen Vorrichtung hat die Fernsehkamera und den Spiegel im unteren Teilraum unterhalb des transparenten Fensters und die erste Lichtquelle oberhalb dieses Fensters im zweiten Teilraum des Gehäuses vorgesehen.

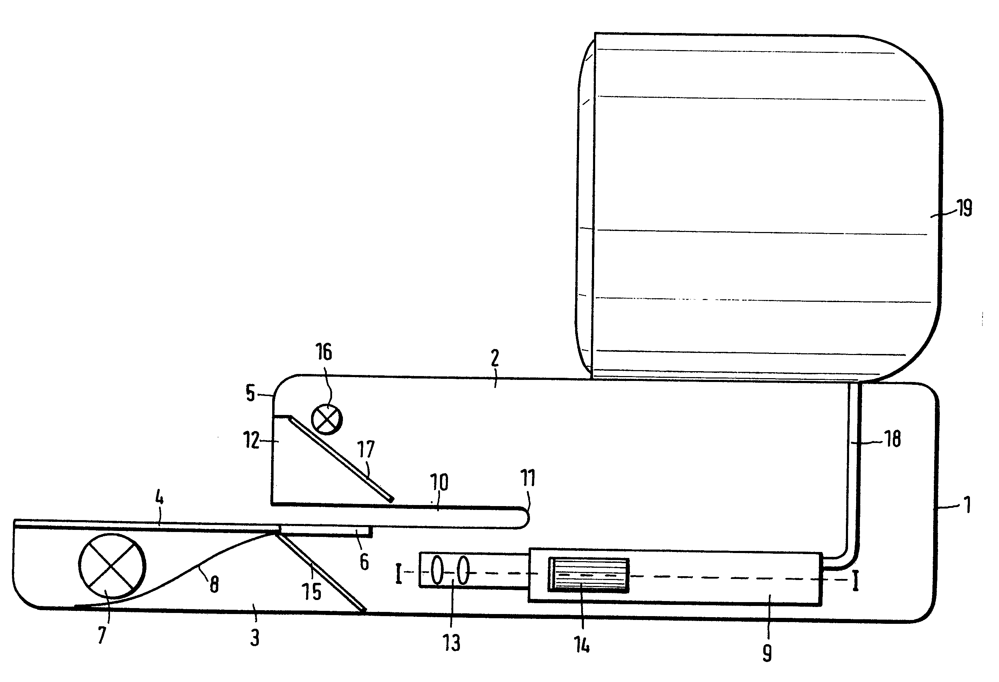

Durch die Zeichnung, die eine seitliche Darstellung der erfindungsgemäßen Vorrichtung zeigt, wobei das Gehäuse senkrecht geschnitten ist und die Einzelkomponenten im Inneren des Gehäuses in schematischer Weise zeigt, wird die Erfindung weiter erläutert.

Die Vorrichtung besteht aus dem Gehäuse 1, das einen oberen Teilraum 2 und einen unteren Teilraum 3 umfaßt. Im vorderen Teil sind diese beiden Teilräume voneinander getrennt, während sie im hinteren Teil des Gehäuses ineinander übergehen.

Die Filmauflagefläche 4 besteht aus einer weißen transparenten Platte, die Licht diffus hindurchtreten läßt. Unmittelbar hinter der Vorderfläche 5 des oberen Teilraumes 2 liegt in der Filmauflagefläche 4 das transparente Fenster 6. Die Filmauflagefläche 4 ragt über die Vorderseite 5 des oberen Teilraumes 2 hinaus, und unter diesem darüber hinausragenden Teil der Filmauflagefläche ist eine Leuchtstofflampe 7 angeordnet, die mit Hilfe eines weißen Reflektors 8 gegenüber der Optik der Fernsehkamera 9 abgeschirmt ist.

Der über der Filmauflagefläche vorgesehene Schlitz 10, der den oberen Teilraum 2 von dem unteren Teilraum 3 des Gehäuses 1 trennt, setzt sich durch die beiden Seitenwände des Gehäuses, die in der Papierebene der Zeichnung liegen, hindurch fort, so daß größere Röntgenfilme beliebig auf der Filmauflagefläche verschoben werden können und auch am seitlichen Rand eines solchen größeren Röntgenfilmes befindliche Einzelheiten über das Fenster 6 gebracht werden können. Um auch am vorderen Rand solcher Filme befindliche Details über das Fenster 6 bringen zu können, erstreckt sich die Filmauflagefläche über das Fenster 6 hinaus bis zu dem Anschlag 11.

Die Fingerausnehmung 12 in der Vorderseite des oberen Teilraumes 2 des Gehäuses dient dazu, manuell kleine Röntgenfilme auf das Fenster 6 legen und von dort entfernen zu können.

In dem unteren Teilraum 3 des Gehäuses 1 ist die Fernsehkamera 9 mit ihrer Optik 13 und ihrer Bildaufnahmeröhre 14 so angeordnet, daß ihre optische Achse I-I parallel zu der Filmauflagefläche 4 liegt. Der Spiegel 15 ist in einem Winkel von 45° zu der Filmauflagefläche und zu der optischen Achse I-I der Fernsehkamera 9 unterhalb des Fensters 6 angeordnet und lenkt so das Licht von der ersten Lichtquelle 16, die sich im oberen Teilraum 2 des Gehäuses 1 befindet, und dem Fenster 6 zu der Optik 13 der Fernsehkamera 9 um. Zwischen dem Fenster 6 und der ersten Lichtquelle 16 ist eine transparente weiße Glas- oder Kunststoffplatte 17 angeordnet, die das Licht der Lichtquelle 16 diffus hindurchtreten läßt.

Die Fernsehkamera 9 ist mit Hilfe eines Kabels 18 mit einem auf dem Gehäuse 1 angeordneten elektronischen Bildwiedergabegerät bzw. Fernsehwiedergabegerät mit einer elektronischen Bildröhre verbunden. Dieses Bildwiedergabegerät besitzt insgesamt das Bezugszeichen 19 und ist ein an sich bekanntes elektronisches Bildwiedergabegerät mit Einrichtungen zur Veränderung des Bildkontrastes, zur Veränderung der Bildhelligkeit und/oder zur Negativ-Positiv-Bildumkehr.

Der über dem Fenster 6 liegende Ausschnitt eines Röntgenfilmes wird mit der erfindungsgemäßen Vorrichtung über die Fernsehkamera 9 in vergrößertem Maßstab auf dem Bildschirm des Bildwiedergabegerätes 19 abgebildet, wo durch Veränderung der hell-dunkel-Kontraste und/oder der Bildhelligkeit und/oder durch Bildumkehr Details sichtbar gemacht werden können, die bei visueller Betrachtung, etwa auf dem Lichtkastenteil über der Leuchtstoffröhre 7 der Vorrichtung, nicht oder praktisch nicht festgestellt werden können.

**Patentansprüche**

1. Vorrichtung für die Auswertung von Röntgenfilmen mit einem Gehäuse (1) mit einer Filmauflagefläche (4), einer Fernsehkamera (9), einer ersten Lichtquelle (16) und einer wirkungsmäßigen Verbindung (18) zwischen der Bildaufnahmeröhre (14) der Fernsehkamera (9) und einem elektronischen Bildwiedergabegerät (19) mit an sich bekannten Einrichtungen zur Veränderung des Bildkontrastes, zur Veränderung der Bildhelligkeit und/oder zur Negativ-Positiv-Bildumkehr, dadurch gekennzeichnet, daß das Gehäuse (1) einen oberen (2) und einen unteren (3) Teilraum einschließt, daß die den unteren Teilraum (3) nach oben begrenzende Filmauflagefläche (4) über die vordere Begrenzung (5) des oberen Teilraumes (2) hinausragt, daß dieser darüber hinausragende Teil der Filmauflagefläche als eine Platte, die Licht diffus hindurchtreten läßt, ausgebildet ist und unter dieser eine zweite Lichtquelle (7) angeordnet ist und daß unmittelbar hinter der vorderen Begrenzung (5) des oberen Teilraumes (2) mittig in der Ebene der Filmauflagefläche (4) ein transparentes Fenster (6), auf der einen Seite desselben die Fernsehkamera (9) und auf der anderen Seite desselben die erste Lichtquelle (16) angeordnet ist.

2. Vorrichtung nach Anspruch 1, dadurch gekennzeichnet, daß die Filmauflagefläche (4) waagerecht angeordnet ist, daß die Fernsehkamera (9) mit ihrer optischen Achse (I-I) parallel zur Filmauflagefläche (4) unterhalb oder oberhalb derselben angeordnet ist, daß in einem Winkel von 45° zu dem Fenster (6) und der optischen Achse (I-I) der Fernsehkamera (9) ein Spiegel (15) angeordnet ist und oberhalb bzw. unterhalb des Fensters (6) dem Spiegel (15) gegenüberliegend die erste Lichtquelle (16) angeordnet ist.

3. Vorrichtung nach Anspruch 1, dadurch gekennzeichnet, daß die zweite Lichtquelle (7) gegenüber der Fernsehkamera (9) abgeschirmt ist.

4. Vorrichtung nach Anspruch 1 bis 3, dadurch gekennzeichnet, daß die Seitenwände des Gehäuses (1) zwischen dem oberen (2) und dem unteren (3) Teilraum oberhalb der Filmauflagefläche (4) parallel zu dieser angeordnete Schlitze (10) aufweisen.

5. Vorrichtung nach Anspruch 1 bis 4, dadurch gekennzeichnet, daß die Filmauflagefläche (4) sich zwischen dem unteren (3) und dem oberen (2) Teilraum über das Fenster (6) hinaus erstreckt.

6. Vorrichtung nach Anspruch 1 bis 5, dadurch gekennzeichnet, daß in der Vorderwand (5) des oberen Teilraumes (2) des Gehäuses (1) oberhalb des Fensters (6) eine Fingerausnehmung (12) vorgesehen ist.

7. Vorrichtung nach Anspruch 1 bis 6, dadurch gekennzeichnet, daß die Fernsehkamera (9) und der Spiegel (15) im unteren Teilraum (3) und die erste Lichtquelle (16) oberhalb des Fensters (6) im oberen Teilraum (2) des Gehäuses (1) angeordnet ist.

8. Vorrichtung nach Anspruch 1 bis 7, dadurch gekennzeichnet, daß zwischen der ersten Lichtquelle (16) und dem Fenster (6) eine Scheibe (17) angeordnet ist, die das Licht dieser Lichtquelle diffus hindurchtreten läßt.

**Claims**

1. Apparatus for evaluating X-ray films comprising a housing (1) with a film support surface (4), a television camera (9), a first light source (16) and an operative connection (18) between the picture tube (14) of the television camera (9) and an electronic picture reproduction device (19) with per se known means for varying picture contrast, for varying picture brightness and/or for negativ-positive picture reversal, characterised in that the housing (1) encloses an upper sub-chamber (2) and a lower sub-chamber (3), that the film support surface (4) which delimits the lower sub-chamber (3) in an upward direction projects beyond the front boundary (5) of the upper sub-chamber (2), that said projecting portion of the film support surface is in the form of a plate which permits light to pass diffusely therethrough and disposed below same is a second light source (7), and that arranged directly behind the front boundary (5) of the upper sub-chamber (2) centrally in the plane of the film support surface (4) is a transparent window (6) with the television camera (9) on one side thereof and the first light source (16) on the other side thereof.

2. Apparatus according to claim 1 characterised in that the film support surface (4) is disposed horizontally, that the television camera (9) is arranged with its optical axis (I-I) parallel to the film support surface (4) beneath or above same, that a mirror (15) is arranged at an angle of 45° to the window (6) and the optical axis (I-I) of the television camera (9) and that the first light source (16) is arranged above or below the window (6) respectively, in opposite relationship to the mirror (15).

3. Apparatus according to claim 1 characterised in that the second light source (7) is screened with respect to the television camera (9).

4. Apparatus according to claims 1 to 3 characterised in that the side walls of the housing (1), between the upper sup-chamber (2) and the lower sub-chamber (3), above the film support surface (4), have slots (10) which are disposed parallel to the film support surface.

5. Apparatus according to claims 1 to 4 characterised in that the film support surface (4) extends between the lower and the upper sub-chambers (3, 2), beyond the window (6).

6. Apparatus according to claims 1 to 5 characterised in that a finger recess (12) is provided in the front wall (5) of the upper sub-chamber (2) of the housing (1) above the window (6).

7. Apparatus according to claims 1 to 6 characterised in that the television camera (9) and the mirror (15) are arranged in the lower sub-chamber (3) and the first light source (16) is arranged above the window (6) in the upper sub-chamber (2) of the housing (1).

8. Apparatus according to claims 1 to 7 characterised in that a plate (17) is arranged between the first light source (16) and the window (6), the plate (17) allowing the light of said light source to pass diffusely therethrough.

**Revendications**

1. Dispositif pour l'examen de radiographies comportant un boîtier (1) ayant une surface porte-film (4), une caméra de télévision (9), une première source lumineuse (16) et une liaison fonctionnelle (18) entre le tube de prise de vues (14) de la caméra de télévision (9) et un appareil électronique de reproduction d'image (19) comportant des dispositifs connus de modification du contraste de l'image, de modification de la luminosité de l'image et/ou d'inversion négatif-positif de l'image, caractérisé en ce que le boîtier (1) renferme un espace supérieur (2) et un espace inférieur (3), en ce que la surface porte-film (4), qui limite vers le haut l'espace inférieur (3), dépasse la limite avant (5) de l'espace supérieur (2), en ce que la partie dépassante de la surface porte-film est formée d'une plaque qui laisse passer la lumière de manière diffuse et sous cette plaque est placée une deuxième source lumineuse (7), et en ce que juste derrière la limite avant (5) de l'espace supérieur (2) est placée au milieu dans le plan de la surface porte-film (4) une fenêtre transparente (6) d'un côté de laquelle est placée la caméra de télévision (9) et de l'autre côté de laquelle est placée la première source lumineuse (16).

2. Dispositif selon la revendication 1, caractérisé en ce que la surface porte-film (4) est horizontale, en ce que l'axe optique (I-I) de la caméra de télévision (9) est placé parallèlement à la surface porte-film (4) au-dessous ou au-dessus de celle-ci, en ce qu'un miroir (15) est placé à 45° de la fenêtre (6) et de l'axe optique (I-I) de la caméra de télévision (9) et en ce que la première source lumineuse (16) est placée en face de ce miroir (15) au-dessus ou au-dessous de la fenêtre (6).

3. Dispositif selon la revendication 1, caractérisé en ce que la deuxième source lumineuse (7) est masquée à la caméra de télévision (9).

4. Dispositif selon l'une quelconque des revendications 1 à 3, caractérisé en ce que les parois latérales du boîtier (1) présentent entre l'espace supérieur (2) et l'espace inférieur (3) des fentes (10) placées parallèlement à la surface porte-film (4) au-dessus de celle-ci.

5. Dispositif selon l'une quelconque des revendications 1 à 4, caractérisé en ce que la surface porte-film (4) s'étend au-delà de la fenêtre (6) entre l'espace inférieur (3) et l'espace supérieur (2).

6. Dispositif selon l'une quelconque des revendications 1 à 5, caractérisé en ce qu'un évidement pour les doigts (12) est prévu au-dessus de la fenêtre (6) dans la paroi avant (5) de l'espace supérieur (2) du boîtier (1).

7. Dispositif selon l'une quelconque des revendications 1 à 6, caractérisé en ce que la caméra de télévision (9) et le miroir (15) sont placés dans l'espace inférieur (3) du boîtier (1) et la première source lumineuse (16) est placée au-dessus de la fenêtre (6) dans l'espace supérieur (2) du boîtier (1).

8. Dispositif selon l'une quelconque des revendications 1 à 7, caractérisé en ce qu'entre la première source lumineuse (16) et la fenêtre (6) est placée une plaque (17) qui laisse passer de manière diffuse la lumière de cette source.